# EUROPEAN PATENT APPLICATION

(11) **EP 2 557 436 A1**
(43) Date of publication of application: **13.02.2013**
(21) Application number: 11766013.4
(22) Date of filing: 08.04.2011
(51) Int. Cl.: G01S 19/48, G01S 5/02, G01S 19/12, H04W 64/00

(54) **MOBILE COMMUNICATION TERMINAL AND METHOD FOR SELECTING POSITIONING SCHEME**

(30) Priority: 09.04.2010 JP 2010090669
(71) Applicant: NTT DOCOMO, INC., Chiyoda-ku Tokyo 100-6150 (JP)
(72) Inventor: HASHIMOTO Jun, Tokyo 100-6150 (JP); TAKAHASHI Makoto, Tokyo 100-6150 (JP); ITAGAKI Kentaro, Tokyo 100-6150 (JP)
(74) Representative: Beder, Jens
(86) International application number: PCT/JP2011/058914
(87) International publication number: WO 2011/126113

(57) **Abstract**

The mobile communication terminal (1) configured to be capable of positioning calculation by a plurality of positioning calculation systems includes a speed sensor unit (14) that detects a traveling speed of the mobile communication terminal (1), a GPS positioning unit (11) that performs positioning calculation through GPS positioning, a wireless LAN positioning unit (12) that performs positioning calculation through wireless LAN positioning with a shorter calculation time than GPS positioning, and a positioning system selection unit (15) that requests the wireless LAN positioning unit (12) to perform positioning calculation when the speed detected by the speed sensor unit (14) is determined to be high based on a predetermined criterion, and requests the GPS positioning unit (11) to perform positioning calculation when the speed is determined to be low based on the predetermined criterion.

## Description

### Technical Field

The present invention relates to a mobile communication terminal and a positioning system selection method.

### Background Art

In a positioning function incorporated in electronic equipment such as a mobile telephone and a car navigation system, a plurality of positioning systems such as positioning using signals from GPS (Global Positioning System) satellites and positioning using signals received from radio base stations of a mobile communication network are widely used.

For example, the following Patent Literature 1 discloses a mobile communication terminal capable of using GPS positioning, hybrid positioning that combines GPS positioning and positioning using signals from radio base stations, and cell sector positioning using signals from radio base stations. Further, the following Patent Literature 2 discloses that, in a mobile communication terminal capable of using a plurality of positioning systems with different positioning accuracy, a positioning system with low positioning accuracy is selected when a traveling speed is high, and a positioning system with high positioning accuracy is selected when a traveling speed is low.

### Citation List

### Patent Literature

Patent literature 1: Japanese Patent Application Laid-Open Publication No. 2007-322237
Patent literature 2: Japanese Patent Application Laid-Open Publication No. 2007-3531

### Summary of Invention

### Technical Problem

However, in the selection method of a positioning system according to the above-described related art, the positioning calculation time tends to be long even when the traveling speed of a terminal is high. Accordingly, a gap between the calculated position and the actually position of the terminal is large, which leads to a large calculation error.

The present invention has been accomplished to solve the above problems and an object of the present invention is thus to provide a mobile communication terminal and a positioning system selection method that can, even when the traveling speed of a terminal varies, reduce a positioning error in accordance with the variation.

### Solution to Problem

To solve the above problem, a mobile communication terminal according to one aspect of the present invention is a mobile communication terminal configured to be capable of positioning calculation by a plurality of positioning calculation systems, which includes a speed detection means for detecting a traveling speed of the mobile communication terminal, a first positioning calculation means for performing positioning calculation using a first positioning calculation system, a second positioning calculation means for performing positioning calculation using a second positioning calculation system with a shorter calculation time than the first positioning calculation system, and a positioning system selection means for requesting the second positioning calculation means to perform positioning calculation when the speed detected by the speed detection means is determined to be high based on a predetermined criterion, and requesting the first positioning calculation means to perform positioning calculation when the speed is determined to be low based on the predetermined criterion.

A positioning system selection method according to another aspect of the present invention is a positioning system selection method for selecting a positioning calculation system when performing positioning calculation by a plurality of positioning calculation systems, which includes a speed detection step of detecting a traveling speed of the mobile communication terminal by a speed detection means, a first positioning calculation step of performing positioning calculation using a first positioning calculation system by the first positioning calculation means, a second positioning calculation step of performing positioning calculation using a second positioning calculation system with a shorter calculation time than the first positioning calculation system by the second positioning calculation means, and a positioning system selection step of requesting the second positioning calculation means to perform positioning calculation when the speed detected by the speed detection means is determined to be high based on a predetermined criterion, and requesting the first positioning calculation means to perform positioning calculation when the speed is determined to be low based on the predetermined criterion.

According to the mobile communication terminal and the positioning system selection method described above, the speed detection means detects the traveling speed of the mobile communication terminal, and the positioning system selection means selects the second positioning calculation system with a shorter calculation time when the traveling speed is high and selects the first positioning calculation system with a longer calculation time when the traveling speed is low, and the first and second positioning calculation means perform positioning calculation according to the selected positioning calculation system. Therefore, when moving at high speed, a positioning error can be reduced by reducing a gap between the actual position and the calculated position, and when moving at low speed, a higher accuracy positioning result can be obtained. As a result, by selecting an optimum positioning system depending on the traveling speed, it is possible to reduce a positioning error as a whole.

### Advantageous Effects of Invention

According to the present invention, even when the traveling speed of a terminal varies, it is possible to reduce a positioning error in accordance with the variation.

### Brief Description of Drawings

Fig. 1 is an outline schematic diagram showing a mobile communication terminal 1 according to a preferred embodiment of the present invention.
Fig. 2 is a block diagram showing a hardware configuration of the mobile communication terminal of Fig. 1.
Fig. 3 is a flowchart showing an operation during a positioning process of the mobile communication terminal of Fig. 1.

### Description of Embodiments

Preferred embodiments of a mobile communication terminal and a location system selection method according to the present invention will be described hereinafter in detail with reference to the drawings. It is noted that in the description of the drawings, the same elements will be denoted by the same reference symbols and redundant description will be omitted.

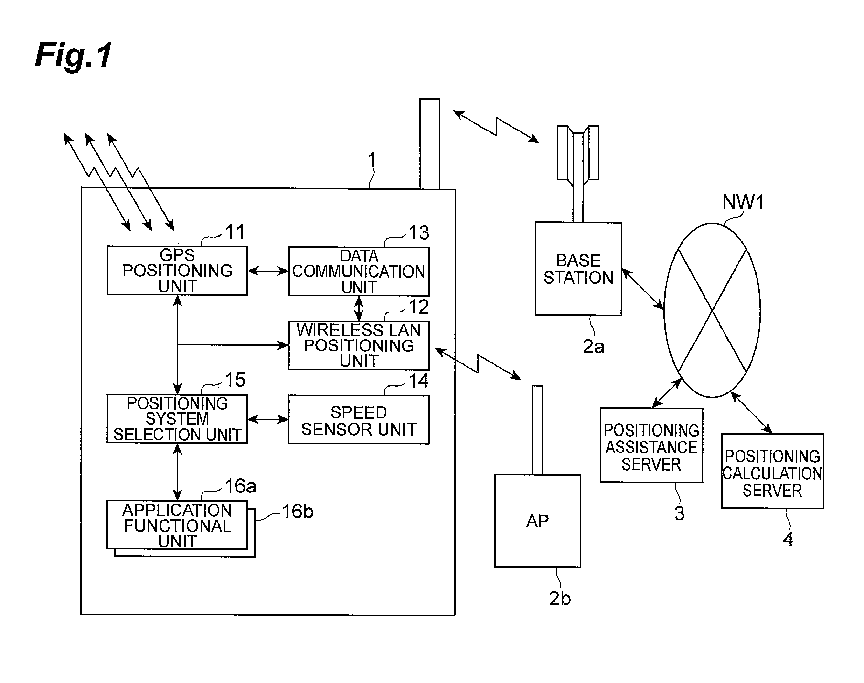

Fig. 1 is an outline schematic diagram showing a mobile communication terminal 1 according to a preferred embodiment of the present invention. The mobile communication terminal 1 shown therein is a mobile communication terminal such as a mobile telephone, a PDA (Personal Digital Assistance) or a smartphone having a communication function through mobile communication technology such as IMT (International Mobile Telecommunications) 2000 and a communication function through wireless LAN communication technology standardized by IEEE std 802.11 and further having a GPS positioning function using signals received from GPS satellites.

As shown therein, the mobile communication terminal 1 is configured to be connectable to a mobile communication network NW1 through a base station 2a. The mobile communication terminal 1 can thereby perform packet data communication and audio communication with various terminal devices or server devices connected to the mobile communication network NW1. Specifically, a positioning assistance server 3 that provides GPS positioning assistance data necessary for GPS positioning to the mobile communication terminal 1, and a positioning calculation server 4 that provides a positioning calculation result on the basis of positioning using wireless LAN (which is referred to hereinafter as "wireless LAN positioning") to the mobile communication terminal 1 are connected to the mobile communication network NW1, and the mobile communication terminal 1 can transmit and receive packet data to and from the positioning assistance server 3 and the positioning calculation server 4.

A hardware configuration and a functional configuration of the mobile communication terminal 1 are described hereinafter in detail.

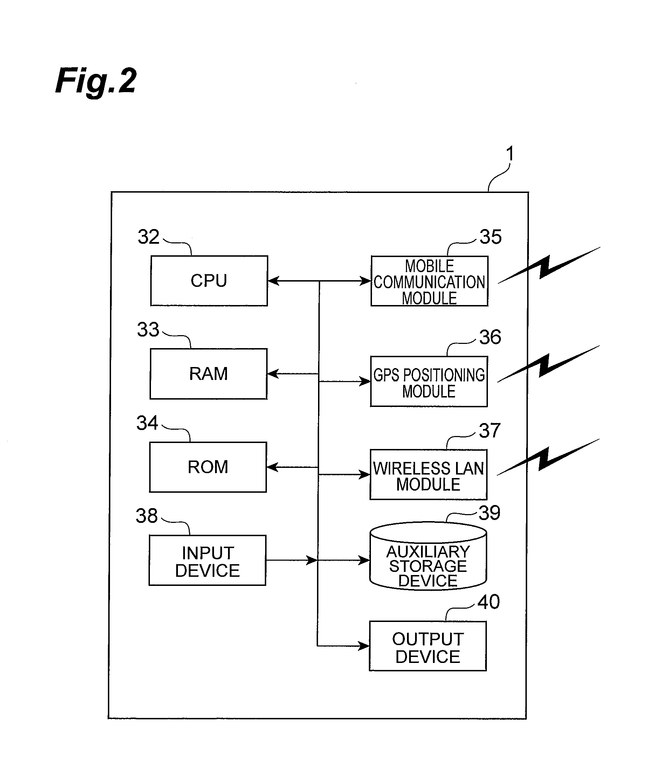

As shown in Fig. 2, the mobile communication terminal 1 is physically configured as an information processing device that includes a CPU 32, RAM 33 and ROM 34 serving as a main memory unit, an auxiliary storage device 39 such as a hard disk device, an input device 38 such as an input key and mouse serving as an input device, an output device 40 such as a display and speaker, a mobile communication module 35 that governs transmission and reception of data with another terminal device, server device or facility in the mobile communication network NW1, a GPS positioning module 36 that receives signals from GPS satellites and conducts GPS positioning, and a wireless LAN module 37 that governs transmission and reception of data through wireless LAN communication. The functions implemented by the mobile communication terminal 1 are implemented by loading a prescribed program onto hardware such as the CPU 32 or the RAM 33 shown in Fig. 2, making the mobile communication module 35, the GPS positioning module 36, the wireless LAN module 37, the input device 38 and the output device 40 operate under control of the CPU 32, and performing reading and writing of data in the RAM 33 or the auxiliary storage device 39.

Referring back to Fig. 1, the mobile communication terminal 1 includes, as functional components, a GPS positioning unit (first positioning calculation means) 11, a wireless LAN positioning unit (second positioning calculation means) 12, a data communication unit 13, a speed sensor unit (speed detection means) 14, a positioning system selection unit (positioning system selection means) 15, and application functional units 16a and 16b.

The application functional units 16a and 16b have a function of manipulating position information of the mobile communication terminal 1 which is acquired by the GPS positioning unit 11 or the wireless LAN positioning unit 12 into various data formats and providing the information to a user of the mobile communication terminal 1 or a user of another terminal. For example, the application functional units 16a and 16b have functions of acquiring map information, store information and the like corresponding to the position information from the mobile communication network NW1 and displaying the information, and transmitting emergency information notification using the position information to another terminal through the mobile communication network NW1.

The GPS positioning unit 11 performs positioning calculation through GPS positioning in order to acquire position information about the current position of the mobile communication terminal 1 by a request from the positioning system selection unit 15. The GPS positioning unit 11 carries out the positioning calculation by receiving signals from GPS satellites using GPS positioning assistance data that is received from the positioning assistance server 3 through the data communication unit 13. Further, the GPS positioning unit 11 sends the position information about the mobile communication terminal 1 generated as a result of the positioning calculation back to the positioning system selection unit 15, together with positioning result information indicating whether the positioning result ends normally. Specifically, when the GPS positioning unit 11 fails to normally calculate the position information caused by a failure to catch a signal from GPS satellites or the like, it generates the positioning result information indicating abnormal termination of the positioning process.

The wireless LAN positioning unit 12 performs positioning calculation using wireless LAN positioning in order to acquire position information about the mobile communication terminal 1 by a request from the positioning system selection unit 15. Specifically, the wireless LAN positioning unit 12 makes a search for a beacon signal from a wireless LAN access point 2b, which is equipment to serve as a wireless LAN node. Then, the wireless LAN positioning unit 12 specifies identification information that identifies the wireless LAN access point 2b which is contained in the beacon signal and radio field intensity information of the beacon signal and transmits them to the positioning calculation server 4 through the data communication unit 13. Further, the wireless LAN positioning unit 12 receives the position information calculated by the positioning calculation server 4 in response thereto through the data communication unit 13.

Further, the wireless LAN positioning unit 12 sends the position information generated by the positioning calculation back to the positioning system selection unit 15, together with positioning result information indicating whether the positioning result ends normally. When the wireless LAN positioning unit 12 fails to normally calculate the position information caused by a failure to catch the beacon signal from the wireless LAN access point 2b or the like, it generates the positioning result information indicating abnormal termination of the positioning process.

Note that the time TTFF (Time To First Fix: Initial positioning time) required for positioning calculation by the GPS positioning unit 11 is typically about 10 to 15 seconds, and the time TTFF required for positioning calculation by the wireless LAN positioning unit 12 is about 1 to 2 seconds. Thus, the calculation time for positioning by the wireless LAN positioning unit 12 is significantly shorter than the calculation time for positioning by the GPS positioning unit 11. This is because GPS positioning uses radio waves from GPS satellites located at great distances while wireless LAN positioning uses radio waves of wireless LAN access points located at short distances.

The data communication unit 13 transmits and receives data for positioning calculation with the positioning assistance server 3 and the positioning calculation server 4 connected to the mobile communication network NW1. For example, the data communication unit 13 receives GPS positioning assistance data from the positioning assistance server 3 in response to a request from the GPS positioning unit 11. Further, the data communication unit 13 transmits the identification information and radio field intensity information about the wireless LAN access point 2b which are passed from the wireless LAN positioning unit 12 to the positioning calculation server 4 and receives position information calculated by the positioning calculation server 4 in response thereto.

The speed sensor unit 14 is a sensor that detects the traveling speed of the mobile communication terminal 1, and it detects the traveling speed with a three dimensional acceleration sensor such as a piezoelectric or capacitance sensor incorporated therein. The speed sensor unit 14 then outputs information about the detected traveling speed to the positioning system selection unit 15.

The positioning system selection unit 15 selects a positioning system between GPS positioning and wireless LAN positioning in response to a request for positioning from the application functional units 16a and 16b and makes a request for positioning calculation to the GPS positioning unit 11 or the wireless LAN positioning unit 12 according to the selection. To be more specific, the positioning system selection unit 15 evaluates the traveling speed detected by the speed sensor unit 14 based on a predetermined criterion. When the positioning system selection unit 15 determines that the traveling speed is high, it requests the wireless LAN positioning unit 12 to carry out positioning calculation, and when the positioning system selection unit 15 determines that the traveling speed is low, it requests the GPS positioning unit 11 to carry out positioning calculation. As the criterion for determination, a predetermined threshold Vₜₕ may be stored in advance, and the traveling speed is determined to be high when it exceeds the threshold Vₜₕ and the traveling speed is determined to be low when it is equal to or less than the threshold Vₜₕ.

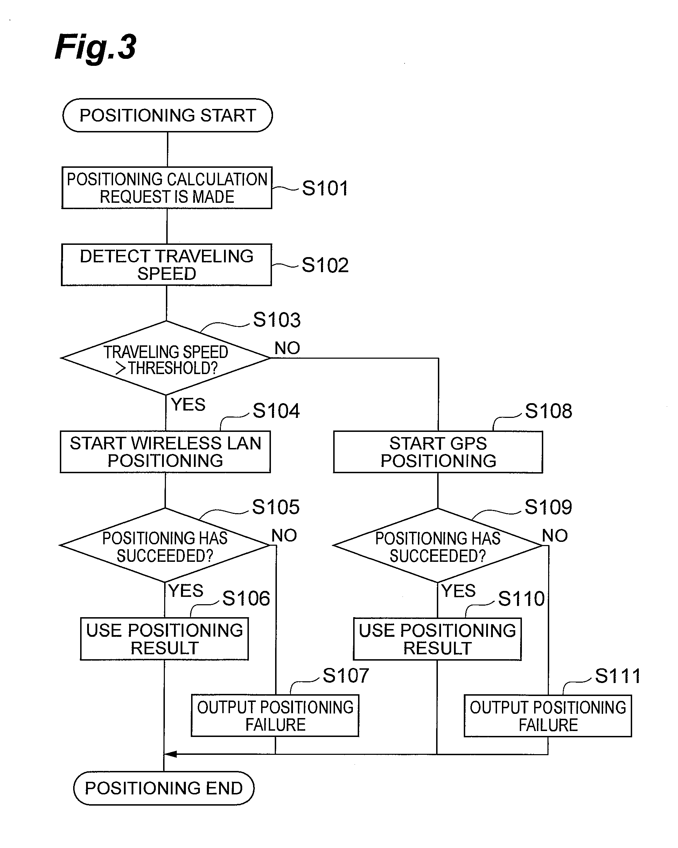

The positioning operation of the mobile communication terminal 1 and a positioning system selection method in the mobile communication terminal 1 are described hereinafter in detail with reference to Fig. 3. Fig. 3 is a flowchart showing an operation during a positioning process of the mobile communication terminal 1.

First, in the mobile communication terminal 1, a positioning request such as a request for acquiring contents using the application functional unit 16a, 16b is made (Step S101). Note that a trigger to start positioning is not limited to a request from a user of the mobile communication terminal 1, and it may be a request from another terminal device or the like connected to the mobile communication network NW1 or automatic start by the application functional unit 16a, 16b. In response to the positioning request, the traveling speed of the mobile communication terminal 1 which is detected by the speed sensor unit 14 is input to the positioning system selection unit 15 of the mobile communication terminal 1 (Step S102).

Next, the positioning system selection unit 15 compares the input traveling speed with a predetermined threshold (Step S103). As a result of comparison, when the traveling speed exceeds the threshold (YES in S103), the positioning system selection unit 15 makes a request for positioning through wireless LAN positioning, and positioning calculation by the wireless LAN positioning unit 12 is started (S104). After that, the wireless LAN positioning unit 12 outputs position information and positioning result information, which are a result of the positioning calculation, to the positioning system selection unit 15, and the positioning system selection unit 15 determines whether the positioning calculation has succeeded or failed (Step S105). When the positioning calculation has succeeded (YES in Step S105), the position information is passed to the application functional unit 16a, 16b, manipulated into a predetermined output format by the application functional unit 16a, 16b, and then output to the output device 40 (Step S106). When, on the other hand, the positioning calculation has failed (NO in Step S105), the positioning result information is passed to the application functional unit 16a, 16b, and information indicating a positioning result failure is output to the output device 40 by the application functional unit 16a, 16b (Step S107).

On the other hand, as a result of comparison in Step S103, when the traveling speed is equal to or less than the threshold (NO in S103), the positioning system selection unit 15 makes a request for positioning through GPS positioning, and positioning calculation by the GPS positioning unit 11 is started (S108). After that, the GPS positioning unit 11 outputs position information and positioning result information, which are a result of the positioning calculation, to the positioning system selection unit 15, and the positioning system selection unit 15 determines whether the positioning calculation has succeeded or failed (Step S109). When the positioning calculation has succeeded (YES in Step S109), the position information is passed to the application functional unit 16a, 16b, manipulated into a predetermined output format by the application functional unit 16a, 16b, and then output to the output device 40 (Step S110). When, on the other hand, the positioning calculation has failed (NO in Step S109), the positioning result information is passed to the application functional unit 16a, 16b, and information indicating a positioning result failure is output to the output device 40 by the application functional unit 16a, 16b (Step S111).

According to the mobile communication terminal 1 and the positioning system selection method described above, the speed sensor unit 14 detects the traveling speed of the mobile communication terminal 1, and the positioning system selection unit 15 selects wireless LAN positioning with a shorter calculation time when the traveling speed is high and selects GPS positioning with a longer calculation time and with high accuracy when the traveling speed is low, and the GPS positioning unit 11 and the wireless LAN positioning unit 12 perform positioning calculation according to the selected positioning calculation system. Therefore, when moving at high speed, a positioning error can be reduced by reducing a gap between the actual position and the calculated position, and when moving at low speed, a higher accuracy positioning result can be obtained. As a result, by selecting an optimum positioning system depending on the traveling speed, it is possible to reduce a positioning error as a whole.

To be more specific, during traveling at high speed on a train or the like, it is possible to avoid that a distance traveled during positioning calculation acts as a positioning calculation error, and, during traveling at low speed such as traveling on foot, it is possible to select a higher accuracy positioning system and reduce a positioning calculation error.

The present invention is not limited to the above-described embodiment. For example, although the GPS positioning unit 11 performs positioning calculation using GPS positioning assistance data in the system shown in Fig. 1, a self-positioning calculation system may be employed without using the GPS positioning assistance data.

Further, although the wireless LAN positioning unit 12 requests the positioning calculation server 4 to perform positioning calculation through wireless LAN positioning, the wireless LAN positioning unit 12 may directly perform positioning calculation.

Furthermore, as a positioning calculation system that is selected during high-speed traveling, cell sector positioning using a signal of a radio base station may be used as a positioning calculation system with a shorter calculation time than GPS positioning.

Further, although the positioning system selection unit 15 determines the traveling speed of the mobile communication terminal 1 on the basis of the traveling speed detected by the speed sensor unit 14, another determination method may be employed. To be specific, an information receiving unit like an IC card may be incorporated as the speed detection means, information indicating the traveling status of the mobile communication terminal 1 (for example, a ride type such as "riding on a bullet train") may be received by the information receiving unit, and the traveling speed may be determined based on the information. Further, in the case where an acceleration sensor is incorporated as the speed detection means and the output waveform of the acceleration sensor indicates a waveform unique to vehicle (for example, unique to a bullet train), it can be determined that a user is riding on the vehicle and traveling at the speed corresponding to the vehicle. Further, a pedometer may be incorporated as the speed detection means, and, on the basis of steps information detected by the pedometer, it can be determined as a low-speed traveling when an increase in the number of steps is detected. Furthermore, area base station information indicating a radio bases station in which area the mobile communication terminal 1 is located may be acquired from the mobile communication network NW1 by the speed detection means, and it can be determined as a high-speed traveling when switching of area base stations occurs frequently.

It is preferred that the first positioning calculation system is GPS positioning, and the second positioning calculation system is positioning using wireless LAN. In this case, when traveling at high speed, a positioning system with a short calculation time can be used to reduce a positioning error, and, when traveling at low speed, a highly accurate positioning system can be used to enhance positioning accuracy.

### Industrial Applicability

The present invention is applicable to a mobile communication terminal and a positioning system selection method and, even when the traveling speed of a terminal varies, enables reduction of a positioning error in accordance with the variation.

### Reference Signs List

1...mobile communication terminal, 11...GPS positioning unit (first positioning calculation means), 12...wireless LAN positioning unit (second positioning calculation means), 14... speed sensor unit (speed detection means), 15...positioning system selection unit (positioning system selection means)

## Claims

1. A mobile communication terminal configured to be capable of positioning calculation by a plurality of positioning calculation systems, comprising:
a speed detection means for detecting a traveling speed of the mobile communication terminal;
a first positioning calculation means for performing positioning calculation using a first positioning calculation system;
a second positioning calculation means for performing positioning calculation using a second positioning calculation system with a shorter calculation time than the first positioning calculation system; and
a positioning system selection means for requesting the second positioning calculation means to perform positioning calculation when the speed detected by the speed detection means is determined to be high based on a predetermined criterion, and requesting the first positioning calculation means to perform positioning calculation when the speed is determined to be low based on the predetermined criterion.

2. The mobile communication terminal according to Claim 1, wherein
the first positioning calculation system is GPS positioning, and
the second positioning calculation system is positioning using wireless LAN.

3. A positioning system selection method for selecting a positioning calculation system when performing positioning calculation by a plurality of positioning calculation systems, comprising:
a speed detection step of detecting a traveling speed of the mobile communication terminal by a speed detection means;
a first positioning calculation step of performing positioning calculation using a first positioning calculation system by the first positioning calculation means;
a second positioning calculation step of performing positioning calculation using a second positioning calculation system with a shorter calculation time than the first positioning calculation system by the second positioning calculation means; and
a positioning system selection step of requesting the second positioning calculation means to perform positioning calculation when the speed detected by the speed detection means is determined to be high based on a predetermined criterion, and requesting the first positioning calculation means to perform positioning calculation when the speed is determined to be low based on the predetermined criterion.
